# EUROPÄISCHE PATENTANMELDUNG

(11) **EP 2 053 351 A2**
(43) Veröffentlichungstag der Anmeldung: **29.04.2009**
(21) Anmeldenummer: 08018502.8
(22) Anmeldetag: 22.10.2008
(51) Int. Cl.: G01B 13/02

(54) **Messsystem, insbesondere zur Messung von Nuten**

(30) Priorität: 23.10.2007 DE 102007050602; 10.12.2007 DE 102007059453
(71) Anmelder: STOTZ FEINMESSTECHNIK GmbH, D-70839 Gerlingen (DE)
(72) Erfinder: Stamenkovic, Milan, Dr., 70469 Stuttgart (DE)
(74) Vertreter: Manitz, Finsterwald & Partner GbR

(57) **Zusammenfassung**

Es ist eine Vorrichtung zur pneumatischen Längenmessung offenbart, die einen Druckluftkanal, einen Messkopf und eine Austrittsöffnung umfasst, in welche der Druckluftkanal mündet. Zur Messung von Druckluftparametern in dem Druckluftkanal, beispielsweise dem Druck, dem Durchfluss oder der Geschwindigkeit, die sich einstellen, wenn die Druckluft auf ein Messobjekt geblasen wird, ist eine Messeinrichtung vorgesehen. Aus der von der Messeinrichtung gemessenen Änderung bei einem Druckluftparameter bestimmt eine Auswerteeinheit den Abstand des Messkopfs vom Messobjekt. Die erfindungsgemäße Vorrichtung zeichnet sich dadurch aus, dass der Messkopf zwischen einer Ausgangsstellung und einer Messstellung beweglich ist und dass Mittel zur Messung des vom Messkopf zwischen Ausgangsstellung und Messstellung zurück gelegten Weges vorgesehen sind.

## Beschreibung

Die vorliegende Erfindung betrifft eine Vorrichtung und ein Verfahren zur pneumatischen Längenmessung nach dem Oberbegriff von Anspruch 1 beziehungsweise Anspruch 23. Dabei wird Druckluft von einer Austrittsöffnung auf ein Messobjekt geblasen. Wenn sich die Austrittsöffnung nahe genug bei dem Messobjekt befindet, tritt eine messbare Änderung bei Druckluftparametern, wie Druck, Durchfluss oder Geschwindigkeit auf, aus welcher der Abstand der Austrittsöffnung von dem Messobjekt ermittelt werden kann.

Derartige Vorrichtungen und Verfahren sind bekannt und werden beispielsweise bei der Fertigung von Werkstücken zur Überprüfung von Toleranzen eingesetzt, da damit eine berührungslose Messung mit hoher Genauigkeit und schneller Messwerterfassung ermöglicht wird. Darüber hinaus ist dieses Messverfahren unempfindlich gegenüber äußeren Einflüssen.

Bei der Fertigung hochpräziser Teile sind für jedes gefertigte Teil oftmals Messungen unterschiedlicher Längen erforderlich. Aufgrund der pneumatischen Eigenschaften können mit einem Messkopf jedoch Längen nur in einer bestimmten Bandbreite gemessen werden. Weichen die Längen mehr voneinander ab, versucht man dem im Stand der Technik gerecht zu werden, indem man mehrere, auf die jeweilige Messaufgabe zugeschnittene Messköpfe für eine pneumatische Längenmessung vorsieht, welche dann nacheinander verwendet werden, um die unterschiedlichen Messungen durchzuführen.

Bei der Vermessung von Nuten unterschiedlicher Breite, die beispielsweise in einen Kolben zur Aufnahme von Kolbenringen eingefräst werden, wird typischerweise für jede zu messende Nut ein eigener Messkopf verwendet, um die unterschiedlichen Breiten der Nuten präzise erfassen zu können.

Diese Herangehensweise verteuert jedoch die Messeinrichtung und macht eine Umrüstung der Messeinrichtung auf die jeweilige Messaufgabe erforderlich. Zudem kann sich die zum Wechseln der Messköpfe benötigte Zeit unvorteilhaft auf die Produktionszyklen auswirken oder zusätzliche Messeinrichtungen erforderlich machen, die weitere Kosten verursachen.

Es ist Aufgabe der Erfindung, derartige bekannte Vorrichtungen und Verfahren zur pneumatischen Längenmessung so weiterzubilden, dass ein Messen verschiedener Längen günstiger möglich ist.

Diese Aufgabe wird durch die Merkmale der unabhängigen Ansprüche gelöst.

Eine erfindungsgemäße Vorrichtung zur pneumatischen Längenmessung umfasst einen Druckluftkanal, einen Messkopf und eine Austrittsöffnung, in welche der Druckluftkanal mündet. Zur Messung von Druckluftparametern in dem Druckluftkanal, beispielsweise dem Druck, dem Durchfluss oder der Geschwindigkeit, die sich einstellen, wenn die Druckluft auf ein Messobjekt geblasen wird, ist eine Messeinrichtung vorgesehen. Aus der von der Messeinrichtung gemessenen Änderung des Druckluftparameters bestimmt eine Auswerteeinheit den Abstand des Messkopfs vom Messobjekt. Die erfindungsgemäße Vorrichtung zeichnet sich dadurch aus, dass der Messkopf zwischen einer Ausgangsstellung und einer Messstellung beweglich ist und dass Mittel zur Messung des vom Messkopf zwischen Ausgangsstellung und Messstellung zurück gelegten Weges vorgesehen sind.

Die erfindungsgemäße Vorrichtung ist somit in der Lage, durch ein Bewegen des Messkopfs aus der Ausgangsstellung in die Messstellung und ein anschließendes Messen eines Abstands zwischen der Austrittsöffnung und dem Messobjekt unterschiedliche Längen mit einem einzigen Messkopf zu erfassen. Es werden somit zur Messung unterschiedlicher Längen nicht mehr unterschiedliche Messköpfe benötigt und ein Umrüsten der Messköpfe entfällt ebenfalls.

Entsprechend verwendet ein erfindungsgemäßes Verfahren zur pneumatischen Längenmessung Druckluft, die aus einer Austrittsöffnung eines Messkopfs auf ein Messobjekt geblasen wird, um aus der Änderung eines Druckluftparameters den Abstand des Messobjekts von der Austrittsöffnung zu bestimmen. Dabei wird ein zwischen einer Ausgangsstellung und einer Messstellung beweglicher Messkopf verwendet und der Weg des Messkopfs zwischen der Ausgangsstellung und der Messstellung gemessen.

Gemäß einer Ausführungsform der erfindungsgemäßen Vorrichtung ist die Auswerteeinheit zur Bestimmung einer Gesamtlänge aus dem vom Messkopf zurückgelegten Weg und dem Abstand des Messkopfs vom Messobjekt ausgebildet.

Auf diese Weise kann eine herkömmliche pneumatische Längenmessung mit einem beweglichen Messkopf derart kombiniert werden, dass der Verfahrweg des Messkopfs in die Erfassung einer zu messenden Gesamtlänge einbezogen werden kann. Dadurch wird es möglich, verschiedene Gesamtlängen mit einem einzigen pneumatischen Messkopf zu messen.

Bei einer bevorzugten Ausführungsform der erfindungsgemäßen Vorrichtung ist der Messkopf an einem beweglichen Schlitten eines Trägersystems befestigt.

Der bewegliche Schlitten des Trägersystems ermöglicht die gewünschte Bewegung des Messkopfs von der Ausgangsstellung in die Messstellung und zurück. Ein geeignetes Trägersystem verfügt dabei über eine präzise Positionierfähigkeit und eine hohe Wiederholgenauigkeit, bevorzugt in der Größenordnung von etwa +/- 1 µm.

Gemäß bevorzugten Ausführungsformen umfasst das Mittel zur Messung des vom Messkopf zwischen Ausgangsstellung und Messstellung zurück gelegten Weges mechanische, elektromechanische, optische oder sonstige Wegmessverfahren.

Geeignete Wegmessverfahren weisen eine Präzision und Auflösung auf, welche in der Größenordnung der Präzision und Auflösung liegen, die durch eine pneumatische Längenmessung ermöglicht werden, beispielsweise +/- 2 µm. Damit kann eine Messung unterschiedlicher Längen mit der Qualität und Präzision einer pneumatischen Messung unter Verwendung eines einzigen pneumatischen Messkopfs durchgeführt werden.

Eine bevorzugte Ausführungsform der erfindungsgemäßen Vorrichtung verwendet als Messeinrichtung zur Messung von Druckluftparametern in dem Druckluftkanal, insbesondere des Drucks, einen Drucksensor.

Der Druck, der in dem Druckluftkanal herrscht, welcher in die Austrittsöffnung mündet, verändert sich aufgrund eines sich entwickelnden Gegendrucks, wenn sich die Austrittsöffnung dem Messobjekt nähert. Andere Druckluftparameter, die alternativ zur Erfassung eines Abstandes der Austrittsöffnung von dem Messobjekt herangezogen werden können, umfassen die Geschwindigkeit und den Durchfluss.

Eine bevorzugte Ausführungsform der erfindungsgemäßen Vorrichtung weist einen Messkopf in der Form eines Plättchens auf.

Dabei weist das Plättchen einen Druckluftkanal auf, der in einer auf dem Plättchen angeordneten Austrittsöffnung mündet. In der Form derartiger Plättchen hergestellte Messköpfe sind für die voranstehend beschriebenen pneumatischen Messaufgaben aufgrund der erzielbaren kleinen Bauformen sehr gut geeignet.

Bei einer Ausführungsform kann das Plättchen L-förmig mit einer Austrittsöffnung sein, die am Ende des kürzeren Schenkels der L-Form angeordnet ist.

Ein Plättchen dieser Ausführungsform ist besonders gut geeignet, um Nuten mit einer geringen Breite zu vermessen. Der kürzere Schenkel der L-Form, der zum Messen in die Nut "eintauchen" muss, bestimmt die minimale Breite einer Nut, die mit einem derartigen Plättchen erfasst werden kann. Zum Messen wird das Plättchen in die Nut eingeführt und anschließend mit seiner Austrittsöffnung in Richtung einer Seitenwand der Nut bewegt, bis eine Änderung eines Druckluftparameters festgestellt wird, und dann eine Abstandsmessung durchgeführt. Aus dem Verfahrweg und der pneumatischen Messung des Abstands zur Seitenwand der Nut wird die Gesamtlänge ermittelt.

Bevorzugte Ausführungsformen weisen ein Plättchen mit zwei rechtwinklig zu einer Längsachse des Plättchens angeordneten Austrittsöffnungen auf.

Dabei sind die zwei Austrittsöffnungen in entgegen gesetzte Richtungen ausgerichtet. Als besonders bevorzugt erweist sich dabei eine T-förmige Ausgestaltung des Plättchens mit zwei Austrittsöffnungen an den Enden des kurzen Querbalkens der T-Form.

Bei einem T-förmigen Plättchen kann in zwei entgegen gesetzten Richtungen gemessen werden und somit beispielsweise die Gesamtbreite einer Nut ermittelt werden, indem erst eine erste Seitenwand der Nut angefahren und gemessen wird und dann die gegenüber liegende zweite Seitenwand der Nut angefahren und gemessen wird. Aus den pneumatisch gemessenen Abstandswerten und dem gemessenen Verfahrweg kann die Gesamtbreite der Nut ermittelt werden.

Bei bevorzugten Ausführungsformen kann der Messkopf im Bereich einer jeden Austrittsöffnung eine beliebige geeignete geometrische Form, beispielsweise gerade, elliptisch oder angefast, aufweisen.

Geeignete geometrische Formen des Messkopfs hängen in der Regel von der Gestalt und der Oberflächenbeschaffenheit des Messobjekts ab; somit können im Bereich einer jeden Austrittsöffnung je nach Messaufgabe unterschiedliche geometrische Kopfformen vorteilhaft sein, beispielsweise eine gerade Oberfläche, eine gebogene Oberfläche, wie elliptisch oder oval, oder einseitige oder zweiseitige Anfasungen.

Eine Ausführungsform der erfindungsgemäßen Vorrichtung weist zwei separate Druckluftkanäle zur getrennten Versorgung der zwei Austrittsöffnungen eines T-förmigen Plättchens mit Druckluft auf, wobei jedem Druckluftkanal ein eigener Drucksensor zugeordnet ist.

Diese Ausführungsform ermöglicht ein gleichzeitiges Messen an beiden Austrittsöffnungen. Dies ist insbesondere dann nützlich, wenn eine zu bestimmende Nutbreite nur geringfügig größer als der Abstand der zwei Austrittsöffnungen des T-förmigen Messkopfs ist.

Eine alternative Ausführungsform der erfindungsgemäßen Vorrichtung weist einen einzigen Druckluftkanal zur gemeinsamen Versorgung von zwei Austrittsöffnungen eines T-förmigen Plättchens mit Druckluft auf. Dabei ist dem Druckluftkanal ein gemeinsamer Drucksensor zugeordnet.

Der Vorteil dieser Ausführungsform besteht darin, dass nur ein Drucksensor und eine Druckluftquelle benötigt werden, wodurch die Messanordnung kostengünstiger hergestellt werden kann. Eine Einschränkung besteht darin, dass mit dieser Anordnung ein gleichzeitiges Messen an beiden Austrittsöffnungen nicht möglich ist, sondern nur jeweils eine Austrittsöffnung zu einer Messung verwendet werden kann, während die Druckluft aus der jeweils anderen Austrittsöffnung ungehindert abströmt. Vorteilhafterweise ist die Öffnungsfläche der Austrittsfläche bei beiden Austrittsöffnungen im Vergleich zu einer Austrittsöffnung verringert, die von einem Druckluftkanal allein versorgt wird, um ähnliche Messverhältnisse zu schaffen, wie sie bei Austrittsöffnungen vorliegen, die von einem Druckluftkanal allein versorgt werden. So können die Öffnungsflächen beispielsweise im Vergleich zu einer Austrittsöffnung, die von einem Druckluftkanal allein versorgt wird, halbiert sein.

Bei einer bevorzugten Ausführungsform weist die erfindungsgemäße Vorrichtung zwei Messköpfe auf, die jeweils in der Form eines L-förmigen Plättchens ausgebildet sein können. Die zwei Messköpfe sind dabei jeweils zwischen einer Ausgangsstellung und einer Messstellung beweglich.

Diese flexible Anordnung der zwei Messköpfe ermöglicht sowohl ein beschleunigtes Messen, beispielsweise der Breite einer Nut, indem beide Wände der Nut gleichzeitig angefahren und gemessen werden können, als auch ein Messen von komplexeren Messobjekten, beispielsweise einer Bohrung mit abgestuften Durchmessern.

Bei vorteilhaften Ausführungsformen der erfindungsgemäßen Vorrichtung sind die Austrittsöffnungen der zwei Messköpfe relativ zueinander in entgegen gesetzte Richtungen entweder von einander weg nach außen oder auf einander zu nach innen ausgerichtet. Besonders vorteilhaft ist dabei, wenn die Orientierung der zwei Messköpfe relativ zueinander durch ein Umdrehen der als Plättchen ausgebildeten Messköpfe austauschbar ist.

Diese Ausführungsformen ermöglichen das Messen von inneren Abmessungen, beispielsweise einer Nutbreite oder eines Bohrungsdurchmessers, wenn die Austrittsöffnungen von einander weg nach außen gerichtet sind. Im umgekehrten Fall, wenn die Austrittsöffnungen auf einander zu nach innen gerichtet sind, ermöglichen sie das Messen äußerer Abmessungen, beispielsweise einer Dicke oder eines Durchmessers eines Messobjekts. Die optionale Möglichkeit, die Orientierung der Plättchen durch ein Umdrehen der Plättchen zu vertauschen, erweist sich beispielsweise bei einem Umrüsten der Messvorrichtung auf eine neue Messaufgabe als besonders vorteilhaft.

Bei einer vorteilhaften Ausführungsform umfasst die erfindungsgemäße Vorrichtung ein Trägersystem mit zwei Schlitten zur Aufnahme je eines der zwei Messköpfe, wobei die Schlitten bevorzugt unabhängig voneinander bewegt werden können.

Diese sehr flexible Anordnung der zwei Messköpfe ermöglicht ein schnelles Messen auch von komplexen Messobjekten, die beispielsweise Konturen mit nicht symmetrischen Kantenverläufen aufweisen, da die Messköpfe unabhängig voneinander bewegt werden können.

Bei Ausführungsformen der erfindungsgemäßen Vorrichtung wird das Trägersystem von einem Gesamtschlitten getragen, der in mindestens eine Richtung verfahrbar ist. Damit kann das Trägersystem mit der erfindungsgemäßen pneumatischen Messvorrichtung an das Messobjekt heran bewegt werden und wieder davon entfernt werden. Optional ist der Gesamtschlitten in zwei zueinander senkrechte Richtungen und ggf. zusätzlich in eine dritte Richtung senkrecht zu der ersten und zweiten Richtung verfahrbar. Mit derartigen Gesamtschlittenanordnungen kann die erfindungsgemäße pneumatische Messvorrichtung relativ zu dem Messobjekt weitgehend frei bewegt werden.

Mit einer alternativen Installation des Trägersystems auf einem Messroboter können die Bewegungsmöglichkeiten der erfindungsgemäßen pneumatischen Messvorrichtung relativ zu dem Messobjekt nochmals ausgeweitet werden. Bei diesen Ausführungsformen der erfindungsgemäßen Vorrichtung erweist sich der optionale Einsatz mindestens einer Kamera zur Steuerung und Überwachung einer Positionierung des mindestens einen Messkopfs relativ zu dem Messobjekt als vorteilhaft.

Bei einer Ausführungsform des erfindungsgemäßen Verfahrens zur pneumatischen Längenmessung wird der mindestens eine Messkopf zum Anfahren der Messstellung solange in Messrichtung bewegt, bis ein Druckluftparameter in dem Druckluftkanal einen vorgegebenen Wert erreicht.

Auf diese Weise können Abweichungen einer tatsächlich vorteilhaften Messstellung von einer vorgesehenen Messstellung aufgrund von Abweichungen des Messobjekts einfach ausgeglichen werden und der mindestens eine Messkopf immer in eine vorteilhafte Messstellung gebracht werden.

Bei einer alternativen Ausführungsform des erfindungsgemäßen Verfahrens zur pneumatischen Längenmessung wird der mindestens eine Messkopf zum Anfahren der Messstellung unter Verwendung mindestens einer Kamera gesteuert.

Durch dieses Verfahren kann eine schnelle, kollisionsfreie Bewegung des mindestens einen Messkopfs in die vorgesehene Messstellung erreicht werden.

Eine Ausführungsform des erfindungsgemäßen Verfahrens verwendet einen Messkopf mit zwei entgegengesetzt ausgerichteten Austrittsöffnungen. Dabei wird der Messkopf zunächst in eine erste Messstellung bewegt und dort gemessen und anschließend in eine zweite Messstellung bewegt und dort gemessen. Aus dem Weg des Messkopfs zwischen der ersten Messstellung und der zweiten Messstellung und aus den Abständen des Messobjekts von der jeweiligen Austrittsöffnung des Messkopfs wird eine Gesamtlänge bestimmt.

Mit diesem Verfahren kann beispielsweise die Breite einer Nut kostengünstig mit nur einem Messkopf gemessen werden.

Eine alternative Ausführungsform des erfindungsgemäßen Verfahrens verwendet zwei Messköpfe, die zwischen je einer Ausgangsstellung und je einer Messstellung beweglich sind und mit entgegen gesetzt ausgerichteten Austrittsöffnungen versehen sind, wobei die Wege der Messköpfe zwischen den jeweiligen Ausgangsstellungen und den jeweiligen Messstellungen sowie mindestens ein Druckluftparameter für jeden Messkopf gemessen werden, um daraus eine Gesamtlänge zu bestimmen.

Dieses Verfahren ermöglicht eine beschleunigte Messung einer Gesamtlänge, da beide Messköpfe gleichzeitig bewegt und zu einer Messung herangezogen werden können.

Nachfolgend wird die Erfindung rein beispielhaft anhand vorteilhafter Ausführungsformen unter Bezugnahme auf die beigefügte Zeichnung beschrieben, in der:
- Fig. 1: eine perspektivische Ansicht ist, die eine auf einem X-Y- Schlitten angebrachte erfindungsgemäße Vorrichtung zur pneumatischen Längenmessung zeigt;
- Fig. 2: eine perspektivische Ansicht ist, welche die erfindungsgemäße Vorrichtung zur pneumatischen Längenmessung bei einer Messung der Breite einer Nut zeigt;
- Fig. 3, 3a: schematische Draufsichten sind, die eine Ausführungsform der erfindungsgemäßen Vorrichtung zur pneumatischen Län- genmessung mit zwei Messköpfen in der Gestalt L-förmiger Plättchen zeigen;
- Fig. 4: eine schematische Draufsicht ist, welche die erfindungsgemä- ße Vorrichtung zur pneumatischen Längenmessung der Aus- führungsform von Fig. 3 zeigt;
- Fig. 5: eine schematische Draufsicht auf eine Ausführungsform der erfindungsgemäßen Vorrichtung zur pneumatischen Längen- messung ist, die einen Messkopf in der Gestalt eines T- förmigen Plättchens bei der Messung innerer Abmessungen eines beispielhaften Messobjekts zeigt;
- Fig. 5a-5d: vergrößerte schematische Darstellungen sind, die verschiede- ne mögliche Formen des T-Plättchens von Fig. 5 zeigen;
- Fig. 6, 6a: schematische Draufsichten auf eine Ausführungsformder erfindungsgemäßen Vorrichtung zur pneumatischen Längen- messung sind, die zwei Messköpfe in der Gestalt T-förmiger Plättchen bei der Messung innerer und äußerer Abmessungen eines beispielhaften Messobjekts zeigen;
- Fig. 7: eine schematische Darstellung eines Messroboters mit einer darauf angebrachten erfindungsgemäßen Vorrichtung zur pneumatischen Längenmessung mit zwei Messköpfen in der Gestalt T-förmiger Plättchen ist, die beispielhafte Messobjekte sowie Kameras zeigt, die zur Steuerung und Überwachung des Messvorgangs verwendet werden; und
- Fig. 8a-8f: schematische Darstellungen verschiedener Messungen sind, welche durch Ausführungsformen der Erfindung ermöglicht werden.

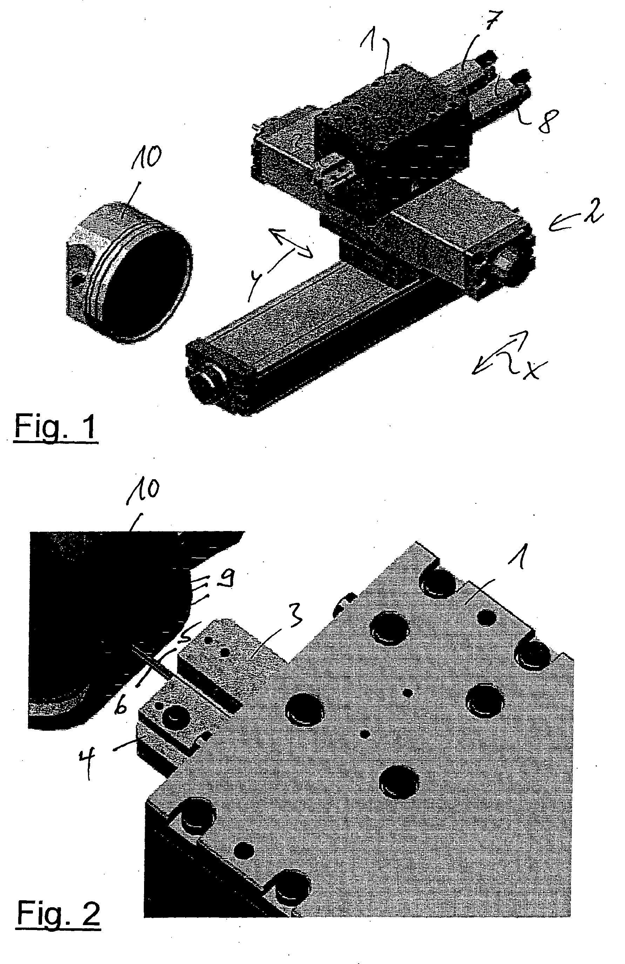

Figur 1 zeigt ein Trägersystem 1, welches auf einem Zweiachsschlitten 2 angeordnet ist. Mit Hilfe des Schlittens 2 kann das Trägersystem 1 in zwei zueinander senkrechten Richtungen X und Y verfahren werden. Ein Verfahren in einer dritten Richtung Z kann grundsätzlich ebenfalls vorgesehen sein.

Das Trägersystem umfasst zwei Schlitten 3, 4, die relativ zur Achse Y beweglich sind, wobei die Länge einer Relativbewegung der beiden Schlitten 3, 4 zueinander von einem im Trägersystem 1 angeordneten Encoder gemessen wird. Dabei liegt die Mess- und die Wiederholgenauigkeit beispielsweise in der Größenordnung von 1 µm. Zur Bewegung der beiden Schlitten 3, 4 kann beispielsweise je ein Piezomotor vorgesehen sein.

Jeder der beiden Schlitten trägt einen (in Fig. 2 gezeigten) Messkopf 5, 6. Jeder Messkopf 5, 6 weist seitlich an seinem vorderen Ende eine Austrittsöffnung auf, durch die Druckluft ausströmt, welche über Pneumatikleitungen 7, 8 zugeführt werden kann. Der Versorgungsluftdruck kann in bekannter Weise gemessen werden.

Zum Messen der Breite einer Nut 9 im Außenumfang eines Kolbens 10 werden die beiden Messköpfe in die Nut 9 eingeführt, wie in Fig. 2 dargestellt ist. Nach Einschalten der Druckluftversorgung werden die beiden Schlitten 3, 4 soweit auseinander bewegt, bis sich aufgrund eines Gegendrucks eine messbare Druckänderung ergibt, aus welcher der Abstand der jeweiligen Austrittsöffnung der Messköpfe 5, 6 vom jeweiligen Rand der Nut 9 ermittelt werden kann. Die Summe aus dem gemessenen Weg der Schlitten 3, 4 und den pneumatisch gemessenen Abständen ergibt die Breite der Nut 9.

Nach Ausfahren der Messköpfe 5, 6 aus der Nut 9 kann eine andere Nut gemessen werden, die eine abweichende Nutbreite aufweisen kann. So können Nuten mit unterschiedlicher Breite mit ein und derselben Messanordnung, die aus dem Trägersystem 1 und den Messköpfen 5, 6 besteht, gemessen werden.

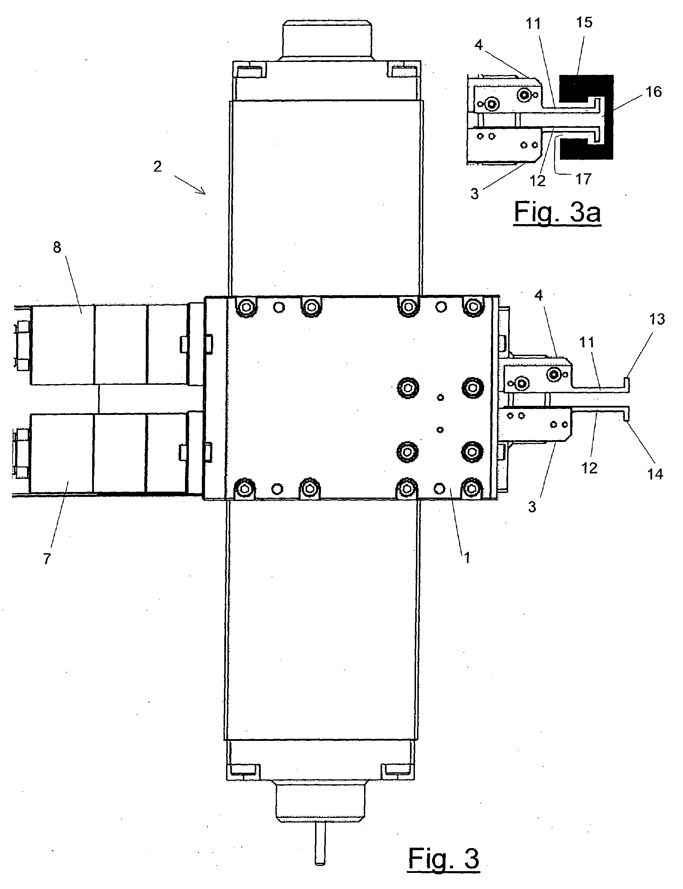

Fig. 3 zeigt das Trägersystem von Fig. 1 und 2 in einer schematischen Draufsicht, wobei anstelle der Messköpfe 5, 6 zwei L-förmige Plättchen 11, 12 gezeigt sind. Jedes der L-förmigen Plättchen 11, 12 weist am jeweiligen Ende des kürzeren Schenkels eine Austrittsöffnung 13, 14 auf. Mit der dargestellten Anordnung, bei der die Austrittsöffnungen von einander weg nach außen weisen, können Innenmessungen durchgeführt werden, wobei es die Beweglichkeit der Schlitten ermöglicht, auch komplexere Innenformen eines Messobjekts zu messen.

So zeigt Fig. 3a ein Messobjekt 15 mit einem Hohlraum 16 und einer Öffnung 17, die den Hohlraum 16 mit dem Außenraum verbindet. Zur Messung der Breite des Hohlraums 16 wird die erfindungsgemäße Messvorrichtung mit den Messköpfen 11, 12 in der Form L-förmiger Plättchen durch die Öffnung 17 in den Hohlraum 16 eingeführt. Da die Breite der Öffnung 17 kleiner als die Breite des Hohlraums 16 ist, werden die Schlitten 3, 4 zunächst auf einander zu bewegt, so dass der Abstand zwischen den beiden Plättchen 11, 12 minimiert wird und die kurzen Enden der Plättchen 11, 12, an welchen sich die Austrittsöffnungen 13, 14 befinden, durch die Öffnung 17 passen.

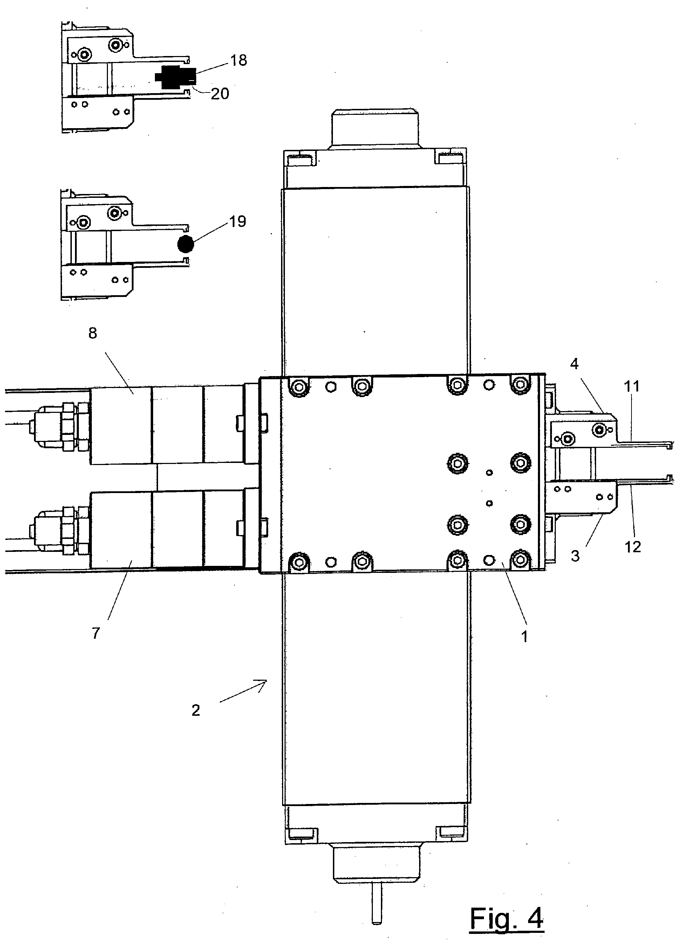

Zur Durchführung einer Außenmessung können die Messköpfe in der Form der L-förmigen Plättchen 11, 12 umgedreht werden, so dass die Austrittsöffnungen 13, 14 aufeinander zu weisen, wie in Fig. 4 dargestellt ist. Dabei können die Messobjekte auch komplexere Konturen aufweisen, wie es durch die beispielhaften Messobjekte 18, 19 in Fig. 4 gezeigt ist. Zur Messung der Dicke 20 des Messobjekts 18 werden zunächst die Schlitten 3, 4 aus einander gefahren, um eine Bewegung der Enden mit den Austrittsdüsen 13, 14 der L-förmigen Plättchen 11, 12 um das Messobjekt 18 herum zu ermöglichen. Anschließend werden die Schlitten 3, 4 wieder zusammengefahren, bis eine messbare Druckänderung anzeigt, dass sich die Plättchen in Messstellung befinden und die Messung durchgeführt werden kann.

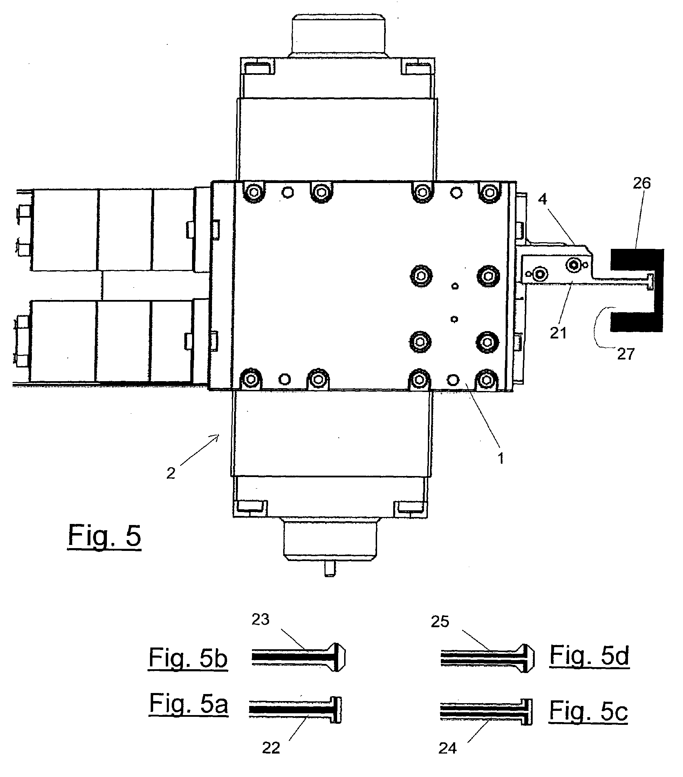

Fig. 5 zeigt in schematischer Draufsicht eine Ausführungsform der erfindungsgemäßen Messvorrichtung mit einem alternativen Messkopf in der Form eines T-förmigen Plättchens. Der alternative Messkopf 21 und 22, 23, 24 und 25 (Fig. 5a - 5d) weist zwei Austrittsöffnungen an den Enden des kurzen Querbalkens der T-Form auf.

Das T-förmige Plättchen kann entweder einkanalig aufgebaut sein, wie in Fig. 5a und 5b bei 22 und 23 gezeigt ist, oder zweikanalig aufgebaut sein, wie in Fig. 5c und 5d bei 24 und 25 gezeigt ist.

Ein einkanaliger Aufbau erlaubt ein Messen zu jedem Zeitpunkt nur an jeweils einer Austrittsöffnung, während die Druckluft aus der jeweils anderen Austrittsöffnung ungehindert abströmt. Um Messresultate zu erzielen, die denjenigen von Austrittsöffnungen ähneln, die über einen Druckluftkanal alleine verfügen, ist die Öffnungsfläche bei Austrittsöffnungen an einem einkanaligen T-förmigen Plättchen im Vergleich zu der Öffnungsfläche von Austrittsöffnungen, die über einen Druckluftkanal alleine verfügen, verringert, beispielsweise halbiert.

Bei einem zweikanaligen Aufbau kann an beiden Austrittsöffnungen des T-förmigen Plättchens gleichzeitig gemessen werden. Dies erweist sich insbesondere dann als vorteilhaft, wenn eine Länge gemessen werden muss, welche die Länge des kurzen Querbalkens der T-Form nur geringfügig übersteigt, da dann ein gleichzeitiges Messen zeitlich vorteilhaft ist.

Wie in Fig. 5a - 5d bei den Messköpfen 22, 23, 24 und 25 gezeigt ist, kann ein Messkopf im Bereich seiner Austrittsöffnung eine gerade, elliptische oder angefaste Form aufweisen, wobei auch andere geeignete geometrische Formen möglich sind. Die jeweils vorteilhafteste Form hängt von der durchzuführenden Messung ab und kann von einem Fachmann bestimmt werden.

Zur Messung einer Ausnehmung 27 in einem Messobjekt 26 wird der Messkopf 21 von dem Trägersystem 1 zunächst vor der Ausnehmung 27 angeordnet. Dann wird das Trägersystem 1 von dem Zweiachsschlitten 2 in X-Richtung auf das Messobjekt 26 zu gefahren und der Messkopf 21 in die Ausnehmung 27 eingeführt. Sobald die erforderliche Eindringtiefe des Messkopfs 21 in X-Richtung erreicht ist, bewegt das Trägersystem 1 den Schlitten 4 in Y-Richtung, bis sich, wie in Fig. 5 dargestellt ist, der Messkopf 21 in der Nähe einer ersten Seitenwand des Messobjekts 26 befindet. Die erfindungsgemäße Messvorrichtung führt eine erste pneumatische Abstandsmessung durch, woraufhin der Messkopf 21 mit dem Schlitten 4 zu der gegenüber liegenden Wand des Messobjekts 26 bewegt wird, um dort eine zweite pneumatische Messung durchzuführen. Aus dem Verfahrweg des Schlittens zwischen den beiden Messstellungen und den jeweils pneumatisch gemessenen Abständen ergibt sich die Gesamtbreite der Ausnehmung 27.

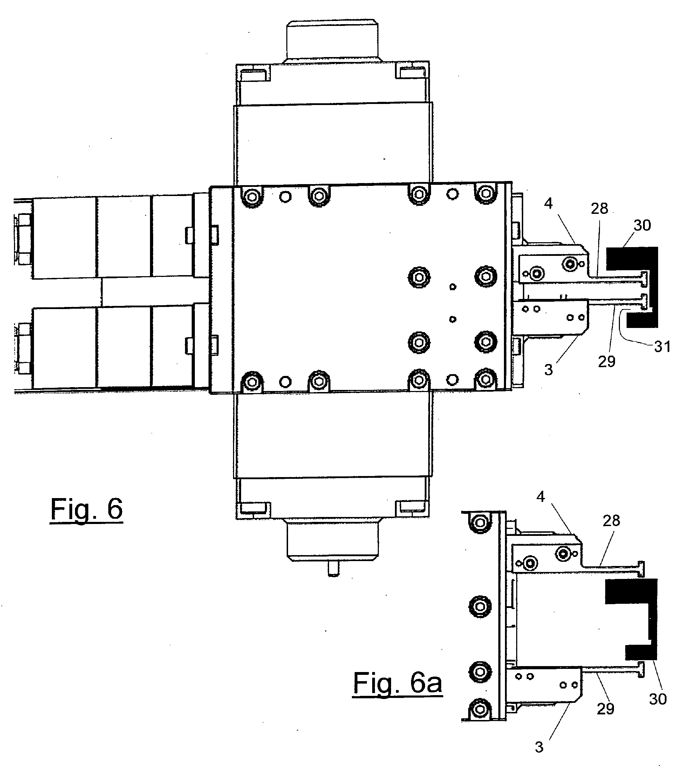

Die in Fig. 6 dargestellte Ausführungsform der erfindungsgemäßen Messvorrichtung verwendet zwei Messköpfe in der Form T-förmiger Plättchen 28, 29. Wie in Fig. 6 und 6a gezeigt ist, eignet sich diese Ausführungsform gleichermaßen zur Durchführung von Innenmessungen und Außenmessungen. Es genügt, die T-förmigen Plättchen 28, 29 bei dieser Ausführungsform jeweils einkanalig auszuführen, wobei eine zweikanalige Ausführung grundsätzlich möglich ist. Aufgrund der T-Form ist zwischen Außenmessung und Innenmessung kein Umrüsten erforderlich.

Wie bei Fig. 6 und 6a gezeigt ist, kann die gezeigte Ausführungsform der erfindungsgemäßen Messeinrichtung sowohl Innenabmessungen als auch Außenabmessungen des Messobjekts 30 messen. Zur Innenmessung werden die Schlitten 3, 4 zusammen gefahren, bis die Plättchen 28, 29 nahe genug beisammen sind, dass sie in die zu messende Ausnehmung 31 eingeführt werden können. Nach dem Einführen in die Ausnehmung 31 bis zu einer vorgegebenen Tiefe werden die Plättchen 28, 29 von den Schlitten 3, 4 gleichzeitig von einander weg gefahren, bis eine messbare Druckänderung anzeigt, dass sich die Plättchen in Messstellung befinden, woraufhin in bereits beschriebener Weise jeweils eine pneumatische Abstandsmessung durchgeführt wird. Aus den ermittelten Abständen und den Verfahrwegen der Schlitten kann die zu messende Breite der Ausnehmung 31 bestimmt werden.

Analog werden zur Außenmessung des Messobjekts 30 in Fig. 6a zunächst die Schlitten 3, 4 soweit auseinander bewegt, dass die Plättchen 28, 29 das Messobjekt 30 von außen umgreifen können. Danach werden die Plättchen 28, 29 auf das Messobjekt 30 zu bewegt, bis sie sich in der gewünschten Messebene befinden. Anschließend werden die Schlitten 3, 4 gleichzeitig aufeinander zu bewegt, bis eine messbare Druckänderung anzeigt, dass sich die Plättchen in Messstellung befinden, woraufhin jeweils eine pneumatische Abstandsmessung durchgeführt wird. Aus den ermittelten Abständen und den Verfahrwegen der Schlitten kann die zu messende Breite des Messobjekts 30 bestimmt werden.

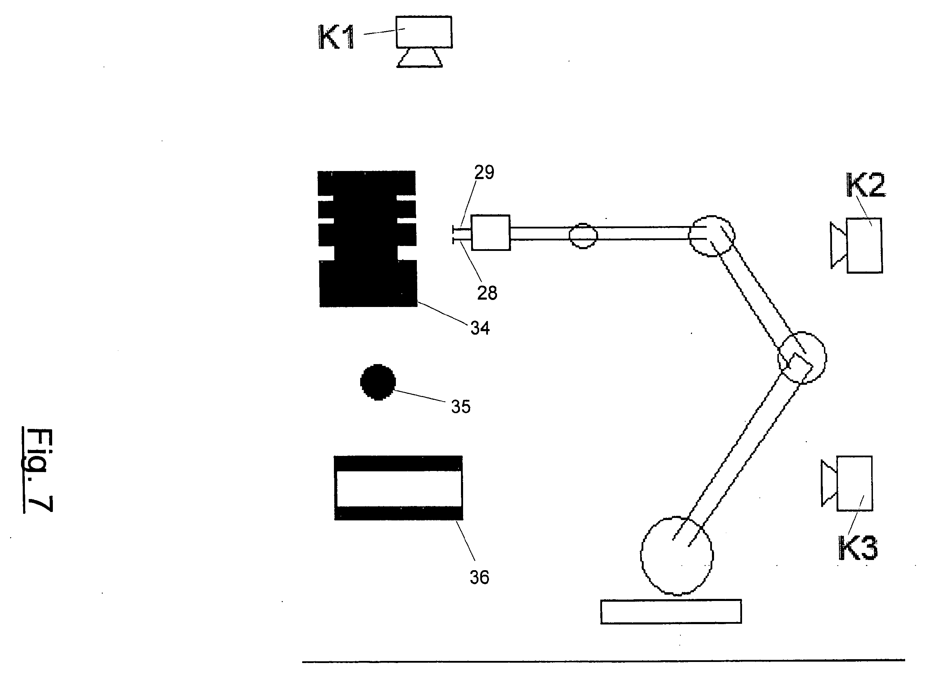

In Fig. 7 ist eine erfindungsgemäße Messvorrichtung der Art, die in Fig. 6 gezeigt wurde, auf einem Messroboter installiert gezeigt. Mit Hilfe des Messroboters, dessen Bewegungen unter Verwendung von drei Kameras K1, K2 und K3 überwacht und gesteuert werden, kann die erfindungsgemäße Messvorrichtung frei im Raum bewegt werden und somit können auch sehr komplexe Messobjekte gemessen oder abgetastet werden. In Fig. 7 sind beispielhafte Messobjekte zur Messung eines Innenabstands, beispielsweise der Breite von Nuten, einer Außenmessung, beispielsweise eines Kolbens, und einer Messung eines Innendurchmessers, beispielsweise eines Rohrs, gezeigt.

Es ist anzumerken, dass sich die in Fig. 1 bis 7 gezeigten Ausführungsformen der erfindungsgemäßen pneumatischen Messvorrichtung nicht nur zur Messung von Abständen eignen, sondern auch zur Abtastung von Konturen bei Messobjekten, also dem so genannten Scannen eingesetzt werden können. Zu diesem Zweck wird mindestens ein Messkopf mit Hilfe des Trägersystems, des Zweiachsschlittens und/oder eines Messroboters entlang der abzutastenden Kontur bewegt. Aus der kontinuierlichen pneumatischen Abstandsmessung während dieser Bewegung kann ein Abtastprofil oder Scanprofil erstellt werden oder es können Toleranzen einer abgetasteten Kontur überprüft werden.

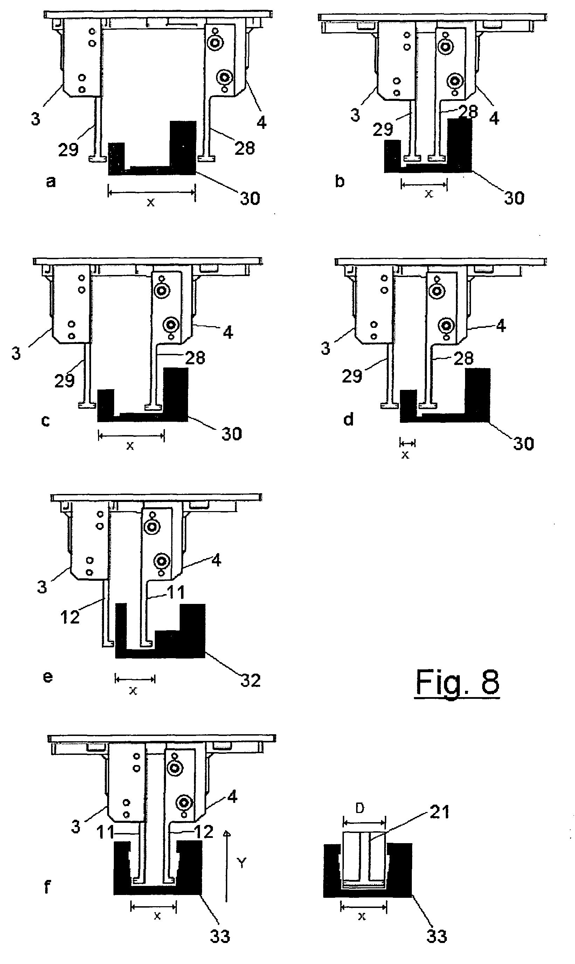

Fig. 8a - 8f zeigen in einer Übersicht verschiedene Messungen, die mit Hilfe von Ausführungsformen des erfindungsgemäßen Messsystems durchgeführt werden können. Die zu messende Strecke ist jeweils durch "x" gekennzeichnet.

In Fig. 8a und Fig. 8d sind Außenmessungen unter Verwendung von zwei T-förmigen Plättchen gezeigt. Fig. 8b stellt eine Innenmessung, ebenfalls unter Verwendung zweier T-förmiger Plättchen dar.

In Fig. 8c werden zwei T-förmige Plättchen verwendet, um eine Abstandsmessung durchzuführen. Bei diesem Plättchentyp werden beide Plättchen aus einer Ausgangsstellung zu dem jeweiligen Messobjekt hinbewegt, bis der gemessene Druck einen Schwellenwert erreicht oder überschreitet. Anschließend erfolgt bei jedem T-förmigen Plättchen eine pneumatische Abstandsmessung zum Messobjekt. Aus den gemessenen Abständen und den Verfahrwegen der Plättchen wird der zu messende Abstand bestimmt.

Eine Abstandsmessung dieser Art kann alternativ auch unter Verwendung zweier L-förmiger Plättchen durchgeführt werden, wie Fig. 8e zeigt. Dabei weisen die Austrittsöffnungen beider Plättchen in die gleiche Richtung. Zur Messung werden die Plättchen aus einer Ausgangsstellung zu dem jeweiligen Messobjekt hinbewegt. Die anschließende pneumatische Messung und Bestimmung des Abstands erfolgt wie voranstehend bei Fig. 8c beschrieben wurde.

Die L-förmigen Plättchen weisen im Vergleich zu T-förmigen Plättchen den immanenten Vorteil einer höheren Auflösung oder Messgenauigkeit auf, da bei diesen die Druckluft nur durch eine einzige Austrittsöffnung ausströmen kann, während bei T-förmigen Plättchen Druckluft stets aus zwei Austrittsöffnungen ausströmt, was bei diesen zu einer Begrenzung der Auflösung oder Genauigkeit einer Messung führt.

Fig. 8f zeigt die Verwendung einer erfindungsgemäßen Messvorrichtung mit zwei L-förmigen Plättchen bei einem Scanvorgang. Die Scanrichtung ist durch Pfeil Y angegeben. Dabei werden zwei L-förmige Plättchen, die an zwei Schlitten so angebracht sind, dass ihre Austrittsöffnungen von einander weg nach außen gerichtet sind, mit einem festen Abstand zueinander in das Messobjekt eingeführt und anschließend in Y-Richtung bewegt, wobei die Konturen des Messobjekts abgetastet oder gescannt werden, im dargestellten Fall der sich über die Tiefe ändernde Bohrungsdurchmesser.

Diese Anordnung kann somit einen herkömmlichen Messkopf in T-Form, wie er in Fig. 8f rechts dargestellt ist, dessen Abstand D der Austrittsöffnungen zueinander speziell für diese Messung oder Abtastung gefertigt wurde, ersetzen.

Die erfindungsgemäße Messvorrichtung erweist sich hierbei als vorteilhaft, da kein speziell angefertigter Messkopf benötigt wird und die Plättchen während des Scanvorgangs bei Bedarf durch die Schlitten nachgeführt werden können, wenn der Abstand zum Messobjekt für die pneumatische Abstandsmessung zu groß wird. In bestimmten Anwendungsfällen ist aber auch eine rein pneumatische Messung, also mit fest eingestelltem Plättchenabstand, möglich, wobei die Endmaße aber wie oben beschrieben zusammen mit dem gemessenen Verfahrweg der Plättchen bestimmt werden.

### Bezugszeichenliste

- 1: Trägersystem
- 2: Zweiachsschlitten
- 3, 4: Schlitten
- 5, 6: Messkopf
- 7, 8: Pneumatikleitungen
- 9: Nut
- 10: Kolben
- 11, 12: L-förmiges Plättchen
- 13, 14: Austrittsöffnung
- 15: Messobjekt
- 16: Hohlraum
- 17: Öffnung
- 18: Messobjekt
- 19: Messobjekt
- 20: Dicke eines Messobjekts
- 21: Messkopf
- 22, 23: einkanaliger Messkopf
- 24, 25: zweikanaliger Messkopf
- 26: Messobjekt
- 27: Ausnehmung
- 28,29: Messkopf
- 30: Messobjekt
- 31: Ausnehmung
- 32 bis 36: Messobjekt
- D: Abstand
- K1 bis K3: Kamera
- X, Y, Z: Verfahrrichtung
- x: Messstrecke

## Patentansprüche

1. Vorrichtung zur pneumatischen Längenmessung mit
einer Druckluftversorgung (7, 8), umfassend einen Druckluftkanal, einem Messkopf (5, 6, 11, 12, 21, 22, 23, 24, 25, 28, 29) und einer Austrittsöffnung (13, 14), in welcher der Druckluftkanal mündet,
einer Messeinrichtung zur Messung eines Druckluftparameters wie Druck, Durchfluss oder Geschwindigkeit, und
einer Auswerteeinheit zur Bestimmung des Abstands des Messkopfs vom Messobjekt (10, 15, 18, 19, 26, 30) anhand der Änderung des gemessenen Druckluftparameters,
**dadurch gekennzeichnet,**
**dass** der Messkopf (5, 6, 11, 12, 21, 22, 23, 24, 25, 28, 29) zwischen einer Ausgangsstellung und einer Messstellung beweglich ist und
**dass** Mittel zur Messung des vom Messkopf zwischen Ausgangsstellung und Messstellung zurück gelegten Weges vorgesehen sind.

2. Vorrichtung nach Anspruch 1,
**dadurch gekennzeichnet,**
**dass** die Auswerteeinheit zur Bestimmung einer Gesamtlänge aus dem vom Messkopf (5, 6, 11, 12, 21, 22, 23, 24, 25, 28, 29) zurückgelegten Weg und dem Abstand des Messkopfs vom Messobjekt (10, 15, 18, 19, 26, 30) ausgebildet ist und/oder
**dadurch gekennzeichnet, dass** der Messkopf (5, 6, 11, 12, 21, 22, 23, 24, 25, 28, 29) an einem beweglichen Schlitten (3, 4) eines Trägersystems (1) befestigt ist.

3. Vorrichtung nach mindestens einem der vorherigen Ansprüche,
**dadurch gekennzeichnet,**
**dass** das Mittel zur Messung des vom Messkopf (5, 6, 11, 12, 21, 22, 23, 24, 25, 28, 29) zwischen Ausgangsstellung und Messstellung zurück gelegten Weges mechanische, elektromechanische, optische oder sonstige Wegmessverfahren umfasst und/oder
**dadurch gekennzeichnet,**
**dass** die Messeinrichtung zur Messung von Druckluftparametern in dem Druckluftkanal, insbesondere des Drucks, einen Drucksensor umfasst.

4. Vorrichtung nach mindestens einem der vorherigen Ansprüche,
**dadurch gekennzeichnet,**
**dass** der Messkopf (11, 12, 21, 22, 23, 24, 25, 28, 29) in der Form eines Plättchens ausgebildet ist, wobei, bevorzugt, das Plättchen (11, 12) L-förmig ausgestaltet ist, wobei eine rechtwinklig zu einer Längsachse des Plättchens angeordnete Austrittsöffnung (13, 14) am Ende des kürzeren Schenkels der L-Form angeordnet ist, oder wobei, bevorzugt, das Plättchen (21, 22, 23, 24, 25, 28, 29) zwei rechtwinklig zu einer Längsachse des Plättchens angeordnete Austrittsöffnungen aufweist, wobei die Austrittsöffnungen in entgegen gesetzte Richtungen ausgerichtet sind, wobei, weiter bevorzugt, das Plättchen (21, 22, 23, 24, 25, 28, 29) T-förmig ausgestaltet ist, wobei die Austrittsöffnungen an den Enden des kurzen Querbalkens der T-Form angeordnet sind.

5. Vorrichtung nach Anspruch 4,
**dadurch gekennzeichnet ,**
**dass** der Messkopf (5, 6, 11, 12, 21, 22, 23, 24, 25, 28, 29) im Bereich seiner Austrittsöffnung eine gerade, elliptische oder angefaste Form aufweist.

6. Vorrichtung nach Anspruch 4,
**gekennzeichnet durch**
zwei separate Druckluftkanäle zur getrennten Versorgung der zwei Austrittsöffnungen des Plättchens (24, 25) mit Druckluft, wobei jedem Druckluftkanal ein eigener Drucksensor zugeordnet ist, oder **durch** einen Druckluftkanal zur gemeinsamen Versorgung der zwei Austrittsöffnungen des Plättchens (22, 23) mit Druckluft, wobei dem Druckluftkanal ein beiden Austrittsöffnungen gemeinsamer Drucksensor zugeordnet ist, wobei, bevorzugt, die Öffnungsfläche jeder der zwei Austrittsöffnungen verglichen mit der Öffnungsfläche einer Austrittsöffnung (13, 14), die von einem Druckluftkanal allein versorgt wird, verringert, beispielsweise halbiert ist.

7. Vorrichtung nach mindestens einem der vorherigen Ansprüche,
**gekennzeichnet durch**
zwei Messköpfe (5, 6, 11, 12, 28, 29), die jeweils zwischen einer Ausgangsstellung und einer Messstellung beweglich sind, wobei, bevorzugt, die Austrittsöffnungen (13, 14) der zwei Messköpfe (11, 12) relativ zueinander in entgegen gesetzte Richtungen entweder von einander weg nach außen oder auf einander zu nach innen ausgerichtet sind, wobei, weiter bevorzugt, die Orientierung der Austrittsöffnungen (13, 14) relativ zueinander austauschbar ist, insbesondere **durch** ein Umdrehen der als Plättchen ausgebildeten Messköpfe (11, 12).

8. Vorrichtung nach mindestens einem der vorherigen Ansprüche,
**dadurch gekennzeichnet, dass**
das Trägersystem (1) zwei Schlitten (3, 4) zur Aufnahme je eines der zwei Messköpfe (5, 6, 11, 12, 28, 29) umfasst, wobei die Schlitten bevorzugt unabhängig voneinander beweglich sind.

9. Vorrichtung nach mindestens einem der vorherigen Ansprüche,
**dadurch gekennzeichnet, dass**
das Trägersystem (1) von einem Gesamtschlitten (2) getragen wird, der in mindestens eine Richtung (X) verfahrbar ist, wobei, bevorzugt, der Gesamtschlitten (2) in zwei zueinander senkrechten Richtungen (X, Y) verfahrbar ist, wobei, weiter bevorzugt, der Gesamtschlitten (2) zusätzlich in eine dritte Richtung senkrecht zu der ersten und zweiten Richtung (X, Y) verfahrbar ist.

10. Vorrichtung nach mindestens einem der vorherigen Ansprüche,
**dadurch gekennzeichnet, dass**
das Trägersystem (1) auf einem Messroboter (Robot) installiert ist und/oder
**gekennzeichnet durch**
mindestens eine Kamera (K1, K2, K3) zur Steuerung und Überwachung einer Positionierung des mindestens einen Messkopfs (5, 6, 11, 12, 21, 22, 23, 24, 25, 28, 29) relativ zu dem Messobjekt (10, 15, 18, 19, 26, 30).

11. Verfahren zur pneumatischen Längenmessung, bei welchem Druckluft aus einer Austrittsöffnung (13, 14) eines Messkopfs (5, 6, 11, 12, 21, 22, 23, 24, 25, 28, 29) auf ein Messobjekt (10, 15, 18, 19, 26, 30) geblasen wird und aus der Änderung eines Druckluftparameters, wie Druck, Durchfluss oder Geschwindigkeit, der Abstand des Messobjekts von der Austrittsöffnung bestimmt wird,
**dadurch gekennzeichnet ,**
**dass** für die Messung mindestens ein zwischen einer Ausgangsstellung und einer Messstellung beweglicher Messkopf verwendet wird und dass der Weg des Messkopfs zwischen der Ausgangsstellung und der Messstellung gemessen wird.

12. Verfahren nach Anspruch 11,
**dadurch gekennzeichnet ,**
**dass** aus dem Weg des Messkopfs (5, 6, 11, 12, 21, 22, 23, 24, 25, 28, 29) zwischen der Ausgangsstellung und der Messstellung und aus dem Abstand des Messobjekts (10, 15, 18, 19, 26, 30) von der Austrittsöffnung des Messkopfs in der Messstellung eine Gesamtlänge bestimmt wird und/oder
**dadurch gekennzeichnet ,**
**dass** der Messkopf (5, 6, 11, 12, 21, 22, 23, 24, 25, 28, 29) zum Anfahren der Messstellung solange in Messrichtung bewegt wird, bis der Druckluftparameter in dem Druckluftkanal einen vorgegebenen Wert erreicht.

13. Verfahren nach Anspruch 11 oder 12,
**dadurch gekennzeichnet ,**
**dass** der Messkopf (5, 6, 11, 12, 21, 22, 23, 24, 25, 28, 29) zum Anfahren der Messstellung unter Verwendung mindestens einer Kamera (K1, K2, K3) gesteuert wird und/oder
**dadurch gekennzeichnet ,**
**dass** ein Messkopf (21, 22, 23, 24, 25, 28, 29) mit zwei entgegengesetzt ausgerichteten Austrittsöffnungen verwendet wird und dass der Messkopf zunächst in eine erste Messstellung bewegt und dort gemessen wird, und dass dann der Messkopf in eine zweite Messstellung bewegt und dort gemessen wird, wobei, bevorzugt, aus dem Weg des Messkopfs (21, 22, 23, 24, 25, 28, 29) zwischen der ersten Messstellung und der zweiten Messstellung und aus den Abständen des Messobjekts von der jeweiligen Austrittsöffnung des Messkopfs in den Messstellungen eine Gesamtlänge bestimmt wird.

14. Verfahren nach einem der Ansprüche 11 bis 13,
**dadurch gekennzeichnet,**
**dass** zwei zwischen je einer Ausgangsstellung und je einer Messstellung bewegliche Messköpfe (11, 12) verwendet werden, deren Austrittsöffnungen (13, 14) in entgegen gesetzte Richtungen ausgerichtet sind, und dass die Wege der Messköpfe zwischen den jeweiligen Ausgangsstellungen und den jeweiligen Messstellungen sowie mindestens ein Druckluftparameter für jeden Messkopf gemessen werden, wobei, bevorzugt, aus dem Weg der Messköpfe (11, 12) von der jeweiligen Ausgangsstellung zu der jeweiligen Messstellung und aus den jeweiligen Abständen des Messobjekts (15, 18, 19) von den Austrittsöffnungen (13, 14) der Messköpfe in den jeweiligen Messstellungen eine Gesamtlänge bestimmt wird.

15. Verfahren nach einem der Ansprüche 11 bis 14,
**dadurch gekennzeichnet,**
**dass** der mindestens eine Messkopf (5, 6, 11, 12, 21, 22, 23, 24, 25, 28, 29) entlang einer Kontur des Messobjekts (10, 15, 18, 19, 26, 30) bewegt wird, um die Kontur des Messobjekts zumindest teilweise abzutasten und/oder
**dadurch gekennzeichnet,**
**dass** der mindestens eine Messkopf (5, 6, 11, 12, 21, 22, 23, 24, 25, 28, 29) mittels einer Positionierung mit Hilfe mindestens einer Kamera (K1, K2, K3) mittig in eine zu messende Kontur des Messobjekts (10, 15, 26, 30) eingeführt wird.
